# EUROPÄISCHE PATENTANMELDUNG

(11) **EP 4 480 292 A1**
(43) Veröffentlichungstag der Anmeldung: **25.12.2024**
(21) Anmeldenummer: 24175916.6
(22) Anmeldetag: 15.05.2024
(51) Int. Cl.: A01B 69/00, G06V 20/56

(54) **MASCHINENGESTÜTZTES SYSTEM FÜR DIE UNTERSCHEIDUNG VON NUTZPFLANZEN UND NICHT-NUTZPFLANZEN UND FÜR DIE DURCHFÜHRUNG VON AKTIONEN AN EBENDIESEN SOWIE VERFAHREN FÜR DIE UNTERSCHEIDUNG UND AKTIONSDURCHFÜHRUNG UND COMPUTERGESTÜTZTE VERÄNDERUNGSEINHEIT**

(30) Priorität: 25.05.2023 DE 102023113853
(71) Anmelder: Dahlia Robotics GmbH, 82402 Seeshaupt (DE)
(72) Erfinder: STEINER, Torsten, 81249 München (DE); LERCH, David, 80637 München (DE)
(74) Vertreter: Winter, Brandl - Partnerschaft mbB

(57) **Zusammenfassung**

Die Erfindung betrifft ein Maschinengestütztes System für eine landwirtschaftliche Nutzung, wobei das System eingerichtet und vorbereitet ist, um eine Aufgabe (24) wie eine Unterscheidung zwischen Nutzpflanzen (27) und Nicht-Nutzpflanzen (28) und/oder eine Positionsänderung (26) einer Vorrichtung durchzuführen, die dazu bestimmt ist, eine Aufgabe (24) an Nutzpflanzen (27) und/oder Nicht-Nutzpflanzen (28) durchzuführen. Sie betrifft auch ein Verfahren zur Durchführung einer Aufgabe (24) genauso, wie ein Verfahren zur Änderung der Position (26) einer Vorrichtung, die dazu bestimmt ist, eine Aufgabe (24) an Nutzpflanzen (27) und / oder Nicht-Nutzpflanzen (28) durchzuführen. Die Erfindung betrifft auch eine computergestützte Veränderungseinheit (10) mit Befehlen zur Durchführung der Verfahren.

## Beschreibung

Die Erfindung betrifft ein maschinengestütztes System für eine landwirtschaftliche Nutzung, wobei das System eingerichtet und vorbereitet ist, um eine Aufgabe wie eine Unterscheidung zwischen Nutzpflanzen und Nicht-Nutzpflanzen und / oder eine Positionsänderung einer Vorrichtung, wie eines Traktors mit Anbaugeräten, durchzuführen, die dazu bestimmt ist, eine Aufgabe an Nutzpflanzen und / oder Nicht-Nutzpflanzen durchzuführen.

Mit Blick auf die landwirtschaftlichen Erzeugnisse ist hierbei zwischen Nutzpflanzen und Nicht-Nutzpflanzen im Hinblick auf ein zu gewinnendes landwirtschaftliches Erzeugnis zu unterscheiden. Wenn beispielsweise Weizen das zu gewinnende landwirtschaftliche Erzeugnis ist, kann jede andere Pflanze, die auf demselben landwirtschaftlichen Gelände wächst, als Nicht-Nutzpflanze betrachtet werden. Ein Beispiel für Letzteres ist Unkraut. Vergleichbare Szenarien finden sich bei jedem Anbau von beispielsweise Getreide, Bäumen oder Blumen. Außerdem können sich Nutzpflanzen in Nicht-Nutzpflanzen verwandeln, wenn sich während des Anbaus die Nutzpflanzen beispielsweise nicht zufriedenstellend entwickeln. Im Allgemeinen bezieht sich der Begriff der Nicht-Nutzpflanze dabei auf eine Pflanze, die zwischen Nutzpflanzen entfernt werden sollte und in ihrer vorliegenden Form nicht nützlich ist. Nutzpflanzen können durch Aussaat oder Anpflanzung gezüchtet werden.

Im ersten Fall wird das Saatgut direkt in den Boden eingebracht, in dem die Nutzpflanzen wachsen sollen. Im zweiten Fall werden die Nutzpflanzen in den Boden gesetzt, in dem die Nutzpflanzen wachsen sollen. Nutzpflanzen werden gesät oder in Reihen gepflanzt. Die Entfernung von Nicht-Nutzpflanzen kann auf verschiedene Weise erfolgen, wie durch manuelle Entfernung, Anwendung von Herbiziden, Verbrennung, konzentrierte Lichtstrahlen, Laserstrahlen, ein elektrisches Spannungsgefälle oder mechanische Werkzeuge. Neben der Entfernung Nicht-Nutzpflanzen müssen mehrere Arbeitsgänge / Aufgaben durchgeführt werden, um wirtschaftlich rentable Ernteerträge zu erzielen. Diesen zuzurechnen sind beispielsweise der Einsatz von Pestiziden zur Schädlings- oder Krankheitsbekämpfung oder die Ausbringung von Düngemitteln. Die Aufgaben können manuell oder durch maschinengestützte Systeme ausgeführt werden.

Ausgehend von dieser Ausgangssituation, ergeben sich abgeleitete technische Anforderungen im Sinne von Teilzielen an ein geeignetes maschinengestütztes System, um die übergeordneten Ziele, zwischen Nutzpflanzen und Nicht-Nutzpflanzen differenzieren und möglichst automatisiert Aufgaben an den Nutzpflanzen und / oder Nicht-Nutzpflanzen während des Betriebs des maschinengestützten Systems durchführen zu können, zu realisieren.

Diesen zuzurechnen sind die Erfassung der Situation an Nutzpflanzen und Nicht-Nutzpflanzen zu einer spezifischen Position des maschinengestützten Systems, die Identifikation eines Bereichs, in dem eine Aufgabe an den Nutzpflanzen und / oder Nicht-Nutzpflanzen durchgeführt werden muss, die Erfassung und Verarbeitung von Daten und die begrenzte Aktionszeit während des Betriebs des maschinengestützten Systems, die Berücksichtigung geografischer Begebenheiten sowie die Ausrichtung des maschinengestützten Systems in Abhängigkeit von den jeweiligen, spezifischen Begebenheiten der Umgebung und des maschinengestützten System in für die Durchführung der Aufgabe geeigneter Weise.

Vor dem Hintergrund dieser Anforderung an / Teilziele für ein geeignetes maschinengestütztes System, ergeben sich aus dem aktuellen Stand der Technik technische Herausforderungen im Zusammenhang mit Lösungen zur Realisierung der Teilziele.

So können existierende kamerabasierte Erkennungssysteme zwar einen Aufgabenbereich als sog. "Bereich von Interesse" (engl. region of interest, ROI), in dem eine Aufgabe notwendig ist, im Bild zu dem Zeitpunkt bestimmen, an dem das Bild von dem Kamerasystem aufgenommen wird. Ein maschinengestütztes System muss jedoch eine Aufgabe erfüllen, während sich das maschinengestützte System auf der Fläche bewegt, auf der die Nutzpflanzen angebaut werden. Je höher die Geschwindigkeit ist, mit der sich das maschinengestützte System auf der Nutzpflanzenanbaufläche bewegt, während es eine Aufgabe erfüllt, desto größer ist der Vorteil eines solchen Systems. Da das Kamerasystem mit einer bestimmten Bildfrequenz arbeitet, verfügt das maschinengestützte System zudem in der Zeitspanne zwischen einer Bildaufnahme und der nächsten Bildaufnahme über keine Informationen, sodass die Aufgabe während dieser Zeit nicht aktualisiert werden kann.

Zudem ergibt sich die Herausforderung, dass die Umgebung, in der Nutzpflanzen angebaut werden, erheblichen Schwankungen unterworfen sein kann. Beispielsweise ist der Abstand zwischen den Nutzpflanzenreihen nicht konstant oder die Position des maschinengestützten Systems oder des Antriebssystems, an dem das maschinengestützte System angebracht oder mit dem es verbunden ist, in Bezug auf die Nutzpflanzenreihen lässt die Positionierung des maschinengestützten Systems aufgrund von Unebenheiten in dem Gebiet, in dem Nutzpflanzen angebaut werden, nicht zu. Der "Bereich von Interesse" ist vor der Ausführung der Aufgabe durch das maschinengestützte System nicht bekannt. Auch die Ungenauigkeit in der Art und Weise, wie sich das maschinengestützte System oder das Antriebssystem, an das das maschinengestützte System angebaut oder angeschlossen ist, auf der Fläche bewegt, auf der Nutzpflanzen angebaut werden, ermöglicht nicht die geeignete Positionierung des maschinengestützten Systems.

Vor diesem Hintergrund ist es Aufgabe der vorliegenden Erfindung die aus dem Stand der Technik bekannten Nachteile zu vermeiden oder wenigstens zu mildern.

Dies wird für bei einem gattungsgemäßen maschinengestützten System dadurch gelöst, dass das maschinengestützte System eingerichtet und vorbereitet ist, um eine Aufgabe wie die Unterscheidung zwischen Nutzpflanzen und / oder Nicht-Nutzpflanzen und / oder eine Positionsänderung einer Vorrichtung durchzuführen, die wiederum dazu bestimmt ist, eine Aufgabe an Nutzpflanzen und / oder Nicht-Nutzpflanzen zu verrichten.

Man könnte auch sagen, dass das maschinengestützte System auf Basis von Informationen zu den Gegebenheiten von Nutzpflanzen und / oder Nicht-Nutzpflanzen in einem Bereich, einer dazugehörenden geografischen Position und zu Zustandsdaten des maschinengestützten Systems nach der Erfassung, Verarbeitung und Verknüpfung der Informationen Signale generiert, die geeignet sind, um eine Vorrichtung zu positionieren und eine Aufgabe in einem Aufgabenbereich / "Bereich von Interesse" an den Nutzpflanzen und / oder Nicht-Nutzpflanzen während des Betriebs des maschinengestützten Systems durchzuführen. In dem Sinne der Erfindung ist dabei ein Verfahren vorgesehen, dass notwendigen Verfahrensschritte und Informationenflüsse einschließlich der Ein- und Ausgangsinformationen beschreibt.

Für die Darstellung der erfinderischen Lösung des Problems sind übergeordnete Begriffe relevant, die spezifisch, wie nachstehend erläutert, zu verstehen sind und Unterbegriffe zusammenfassen.

Ein sog. maschinengestütztes System kann von Hand getragen werden, an ein Antriebs- oder Energieerzeugungssystem, wie Traktoren oder Roboter, angebaut oder mit diesem verbunden sein oder selbst ein Antriebs- oder Energieerzeugungssystem enthalten. Darüber hinaus kann ein maschinengestütztes System manuell bedient werden, es kann bei der Ausführung einer Aufgabe autonom arbeiten, aber in Bezug auf andere Aktivitäten manuell bedient werden, oder vollständig autonom sein.

Ein in ein maschinengestütztes System eingebauter sog. Aufgabenaktuator ist eine Vorrichtung eines maschinengestützten Systems, durch die eine Aufgabe ausgeführt wird. Ein Aufgabenaktuator kann beispielsweise ein Schalter oder ein Ventil, um Herbizide oder Düngemittel durch eine Düse zu verteilen, ein Hydraulikkolben oder ein Pneumatikkolben oder ein Elektromotor, um mechanische Hacken zu betätigen, eine Vorrichtung, die Laserstrahlen oder konzentriertes Licht aussendet, ein elektromechanischer Motor, um die Richtung eines Laserstrahls oder eines konzentrierten Lichtstrahls entweder direkt oder über eine reflektierende Oberfläche zu bestimmen, oder ein Werkzeug, das eine Spannungsdifferenz übertragen kann, sein. Ein maschinengestütztes System kann eine oder mehrere Aufgaben gleichzeitig oder nacheinander ausführen.

Ein sog. "Bereich von Interesse" ist die Lage bestimmter Punkte oder "Bereiche von Interesse" in Bezug auf Nutzpflanzen oder Nicht-Nutzpflanzen, für den im Sinne eines Aufgabenbereichs eine Aufgabe durchzuführen ist. Zu den Punkten oder Bereichen von Interesse gehören die Lage bestimmter Teile der Nutzpflanze oder der Nicht-Nutzpflanze, wie die Stelle, an der die Nutzpflanze oder die Nicht-Nutzpflanze in den Boden eindringt, das Meristem, die Blüte, die Frucht, Bereiche, die von Schädlingen oder Krankheiten oder Krankheitsüberträgern betroffen sind, der Blattbereich oder Zweige.

Ein sog. Umsetzungsaktuator ist eine Vorrichtung in einem maschinengestützten System, die die Position des Aufgabenaktuators innerhalb des maschinengestützten Systems oder die Position des Aufgabenaktuators in Bezug auf das Antriebssystem, an das das maschinengestützte System angebaut oder angeschlossen sein kann, verändert, oder die Position des maschinengestützten Systems in Bezug auf die Fläche, auf der Nutzpflanzen angebaut werden, oder die Position des Antriebssystems, an das das maschinengestützte System angebaut oder angeschlossen ist, in Bezug auf die Fläche, auf der Nutzpflanzen angebaut werden.

Vorteilhafte Ausführungsformen sind in den Unteransprüchen beansprucht und werden nachstehend näher erläutert.

So ist es von Vorteil, wenn mindestens eine maschinensystemseitige oder externe computergestützte Bilderfassungsvorrichtung vorhanden ist, die ausgelegt ist, mit einem vordefinierten Sichtfeld und mit einer vordefinierten Bildfrequenz eine Vielzahl von Einzelbildern aufzunehmen. Für die realitätsnahe Abbildung des Bereichs, in dem eine beliebige Kombination von Nutzpflanzen und Nicht-Nutzpflanzen wächst, hat es sich nämlich als vorteilhaft erwiesen, eine Bilderfassungsvorrichtung in Ausgestaltung mindestens eines Kamerasystems vorzusehen, die mindestens über ein Objektiv mit einer für die Anwendung geeigneter Brennweite und einem ebenfalls geeigneten Sichtfeld verfügt und Einzelbildaufnahmen mit einer vordefinierten Bildfrequenz bei einer ebenfalls vordefinierten Belichtungszeit erstellt. In diesem Zusammenhang sind insbesondere das Sichtfeld und die Bildfrequenz wesentlich für die Erfindung und vorteilhaft festzulegen, da diese den betrachteten Bereich an Nutzpflanzen und Nicht-Nutzpflanzen und die Zeit bestimmen, in der aktualisierte Informationen zu dem Zustand an Nutzpflanzen und Nicht-Nutzpflanzen ermittelt werden. Dabei ist es in besonderer Weise vorteilhaft, dass die Einzelbildaufnahmen in einer digital und damit computergestützt weiterzuarbeitenden Form generiert werden, damit die Daten aus einem Bild / Bilddaten während des Betriebs des maschinengestützten Systems zeitnah als Eingangsdaten für mögliche nachgelagerte Verfahrensschritte und Bestandteile / Einheiten des maschinengestützten Systems zur Verfügung stehen. Die Bilderfassungsvorrichtung kann dabei als Teil des maschinengestützten Systems maschinensystemseitig oder als externe Vorrichtung ausgestaltet und vorgesehen sein. Der Einsatz mehrerer Bilderfassungsvorrichtungen ist zudem denkbar und vorteilhaft beispielsweise im Hinblick auf eine Abbildung eines Bereichs an Nutzpflanzen und Nicht-Nutzpflanzen aus möglichen verschiedenen Perspektiven der Bilderfassungsvorrichtungen.

Es hat sich bewährt, wenn ein computerlesbares Medium vorhanden ist, das konfiguriert ist, um einen Algorithmus zur Bestimmung eines Bildteilbereichs als "Bereich von Interesse" auszuführen. Um den für das maschinengestützte System relevanten Aufgabenbereich, den "Bereich von Interesse", im Bildbereich der Einzelbildaufnahme zu identifizieren, hat es sich als vorteilhaft erwiesen ein Bildverarbeitungssystem vorzusehen, die die eingehenden Daten aus einem Bild / Bilddaten unter Anwendung zumindest eines vordefinierten und geeigneten Algorithmus verarbeitet und darauf aufbauend den "Bereich von Interesse" identifiziert. Alternativ ist der Einsatz computerlesbare Medien denkbar. Dabei ist es in besonderer Weise von Vorteil, dass eine Differenzierung zwischen Nutzpflanzen und Nicht-Nutzpflanzen erfolgt, um eine nach zu lagernde Aufgabe an einer der Pflanzenarten gezielt für einen spezifischen ausführen zu können. Der "Bereich von Interesse" stellt dabei einen Bildteilbereich, dar und ist in vorteilhafter Weise dadurch charakterisiert, dass dieser "Bereich von Interesse" den Bereich zeigt, in dem eine Aufgabe an einer der Pflanzenarten notwendig ist. Im Zusammenhang mit dem "Bereich von Interesse hat es sich weiterhin als vorteilhaft erwiesen, diesen für alle Einzelbildaufnahmen zu ermitteln, um die jeweils aktuelle Situation an Nutzpflanzen und Nicht-Nutzpflanzen in Abhängigkeit von der Position des maschinengestützten Systems zu erfassen. Im Sinne der Weiterverarbeitung der gewonnenen Informationen zu dem "Bereich von Interesse" durch das maschinengestützte System hat es sich weiterhin als vorteilhaft erwiesen, das Bildverarbeitungssystem computergestützt respektive das Medium computerlesbar auszuführen, um digitale Eingangsdaten zu erhalten und Ausgangsdaten computergestützt zeitaktuell im Betrieb des maschinengestützten Systems weiterzugeben oder anzuzeigen. Weiterhin denkbar und vorteilhaft ist der Einsatz computerlesbarer Medien zur technischen Funktionserfüllung. Darüber hinaus hat sich die Ausgabe des "Bereichs von Interesse" in dem aufgenommenen Bild als vorteilhaft erwiesen, um diesen optisch kenntlich und beispielsweise durch den Bediener des maschinengestützten Systems nachvollziehbar zu machen.

Es werden vorteilhafterweise global shutter Kameras mit shuttersynchronen Blitzlampen verwendet. Dies ist ein erprobtes Konzept beim maschinellen Sehen. Blitzlampen werden verwendet, um mehr Invarianz gegenüber Umgebungslicht zu bekommen. Die Lampen blitzen dabei so hell, dass auch von Pflanzen bei starkem Sonnenlicht geworfene "harte" Schatten nicht zu Problemen - oder nicht so stark wie bisher - in der Bildauswertung führen. Mann könnte auch sagen, dass die Kameras "in" die harten Schatten sehen können, bzw. auch bei Nacht genug Licht für die Belichtung bekommen. Weiterer Vorteil der Blitze ist der deutlich reduzierte Energieverbrauch, da nur genausolang beleuchtet wird, wie es für die Kameras nötig ist (anstatt "permanent Licht an").

Es ist von Vorteil, wenn ein computerlesbares Medium vorhanden ist, das konfiguriert ist, um einen Algorithmus zur Bestimmung eines Bildteilbereichs als "Bereich von Interesse" auszuführen. In im Sinne der Datenverknüpfung in vorteilhafter Weise erfolgt eine Erfassung von Daten zur Geoposition des maschinengestützten Systems simultan zu den Bildaufnahmezeitpunkten und der Bildverarbeitung. Für diesen Zweck hat sich eine maschinensystemseitige Vorrichtung zu einer sog. Georeferenzierung des maschinengestützten Systems als vorteilhaft erwiesen. Die Geopositionsdaten geben den Daten aus einem Bild / Bilddaten über die Georeferenzierung einen örtlichen Bezug im Sinne der Zuordnung der Daten aus einem Bild / Bilddaten zu einer räumlichen Position des maschinengestützten Systems, d.h. zu den geografischen Koordinaten. Die Ausgestaltung als maschinensystemseitige Vorrichtung gewährleistet dabei den Bezug zu dem maschinengestützten System in vorteilhafter Weise. Als Vorrichtungen für die Georeferenzierung haben sich insbesondere Antennenvorrichtungen nach dem Standard des globalen Navigationssatellitensystems (engl. Global Navigation Satellite System, GNSS) aufgrund der Möglichkeit der sehr präzisen und prozesssicheren Bestimmung der geografischen Position als vorteilhaft erwiesen. Darüber hinaus ist der Einsatz von GNSS-Antennenvorrichtungen sinnvoll, die für GNSS-Systeme wie das Global Positioning System (GPS), Galileo, das Beidou Satellite Navigation System (BDS), das Global Navigation Satellite System (GLONASS), das Indian Regional Navigation Satellite System (IRNSS), das Navigation Indian Constellation (NavIC) oder das Quasi-Zenith Satellite System (QZSS) geeignete Positionsinformationen liefert. Diese Systeme lassen sich auch erweitern zu einem Echtzeitkinematik (RTK) System. Vorteilhaft im Sinne der Funktionserfüllung ist der Einsatz mindestens einer GNSS-Antennenvorrichtung. Der Einsatz mehrerer GNSS-Antennenvorrichtungen ist ebenfalls denkbar. Ergo sind zwei unabhängig voneinander zu betreibende RTK-Antennen von Vorteil, um jederzeit ein stabiles "Heading" berechnen zu können. Die RTK-Daten lassen sich auch anderen Maschinen zur Verfügung stellen, um andere Arbeitsgänge an den Pflanzen auszuführen. Im Prinzip kann in Abhängigkeit von der Auflösung auch eine Drohne oder ein Flugzeug / ein Satellit genutzt werden.

Es ist von Vorteil, wenn mit der Kamera von oben auf die Nutzpflanzen gesehen wird, um nicht nur "grüne Streifen" - wie herkömmlich - zu erkennen, an denen sich die Vorrichtung orientiert, sondern vielmehr auch die Art der Pflanzen, die die "grünen Streifen" stellen, zu bestimmen. Somit ist eine Orientierung an den gewünschten Nutzpflanzen möglich, selbst wenn das komplette Feld von Unkraut überwachsen ist, und sich die Bereiche mit Vegetation mit dem herkömmlichen Verfahren nicht mehr von denen ohne Vegetation unterscheiden lassen

Es können weitere Metadaten (zum Beispiel bezogen auf die Blattoberfläche, einen vorhandenen / festgestellten Nährstoffmangel, Trockenstress, Insektenbefall) über die Pflanzen gespeichert werden, die zu weiteren Aktionen der Bauern führen können. Beispiel: Insektenplage =\> Insektizid; Trockenstress der Pflanzen (lokal) =\> gezielte Bewässerung; Frühe Detektion (und Bekämpfung) mancher Insekten kann z.B. bei der Zuckerrübe den Einsatz von Fungiziden überflüssig machen. Es ist also denkbar, das System auch zum Erkennen von schädlichen Insekten einzusetzen und somit schon präventiv aktiv zu werden.

Vorteilhaft ist es, wenn eine maschinensystemseitige Vorrichtung für eine Georeferenzierung des Systems vorhanden ist. Ebenfalls simultan zur der Bildaufnahme und zu der Georeferenzierung erfolgt in, im Hinblick auf die Datenverknüpfung, in vorteilhafter Weise die Ermittlung von Zustandsdaten des maschinengestützten Systems über eine Vorrichtung. Durch die bereits vorhandenen Geoinformationen in Kombination mit bestehenden Informationen über Feldgrenzen kann somit ein "Geofence" implementiert werden, innerhalb dessen das Gesamtsystem zu verleiben hat.

Für die Ausgestaltung dieser Vorrichtung oder einer anderen Einheit hat es sich als vorteilhaft erwiesen eine sog. inertiale Messeinheit (engl. Inertial Measurement Unit, IMU) und damit eine sensorische Messeinheit eines Trägheitsnavigationssystems vorzusehen, die mehrere Inertialsensoren / Masse- bzw. Trägheitssensoren und damit Sensoren, die die Bewegung des maschinengestützten Systems und deren Änderung erfassen, räumlich kombiniert. Als vorteilhaft für das maschinengestützte System im Sinne der Erfindung hat sich die Erfassung von Sensordaten erwiesen, die die Beschleunigung, die Winkelgeschwindigkeit und die Ausrichtung des maschinengestützten Systems wiedergeben. Hierbei hat sich die Ausführung der Messeinheit als maschinensystemseitige Vorrichtung als vorteilhaft erwiesen, um die Daten direkt an dem maschinengestützten System zu erfassen.

Eine besondere Ausführungsform ist dadurch gekennzeichnet, dass eine maschinensystemseitige Vorrichtung zur Erfassung der IMU-Trägheit vorhanden ist. Um die mindestens erfassten GNSS- sowie die IMU-Trägheitsdaten zu verarbeiten und zu verbinden / kombinieren, hat es sich zudem als vorteilhaft erwiesen, eine Verknüpfungseinheit vorzusehen, die vorbereitet ist, die Eingangsdaten zu verknüpfen. Zur Realisierung dieser Funktion hat sich ein sog. Navigationsverarbeitungssystem als vorteilhaft erwiesen, welches die notwendigen Datenverarbeitungseinheiten beinhaltet und die verknüpften Informationen als Ausgangsdaten weitergibt.

Wenn eine Verknüpfungseinheit vorhanden und vorbereitet ist, die die eingehenden Daten zur Geoposition und IMU-Trägheit zu verknüpfen, so stellen sich bei dieser Ausführungsform besondere Vorteile ein. Für die Weiterverarbeitung der Ausgangsdaten des computergestützten Bildverarbeitungssystems / computerlesbaren Mediums und des Navigationsverarbeitungssystems hat es sich weiterhin als vorteilhaft gezeigt, eine sog. computergestützte Veränderungseinheit vorzusehen. Diese Veränderungseinheit ist dabei in vorteilhafter Weise vorbereitet, um zumindest einen sog. Bild-Georeferenzierungsalgorithmus, einen sog. Aktuationsalgorithmus und einen sog. Repositionierungsalgorithmus computergestützt auszuführen. Der Bild-Georeferenzierungsalgorithmus bestimmt dabei in vorteilhafter Weise durch die Abbildung der Ausgabe des computergestützten Bildverarbeitungssystems / computerlesbaren Mediums, des "Bereichs von Interesse", auf die Raumkoordinaten / Gepositionsdaten, die über die GNSS-Antenneneinheit bereitgestellt werden, die Raumkoordinaten des "Bereichs von Interesse". Der somit georeferenzierte "Bereich von Interesse" stellt die Ausgangsgröße des Bild-Georeferenzierungsalgorithmus dar. Für die Informationen zu dem georeferenzierten "Bereich von Interesse" hat es sich als vorteilhaft erwiesen, dass diese als Eingangsinformationen für den Aktuationsalgorithmus und den Repositionierungsalgorithmus weiterverarbeitet werden.

Die Erfindung betrifft auch ein Verfahren zur Durchführung einer Aufgabe an Nutzpflanzen und/oder Nicht-Nutzpflanzen unter Verwendung von Daten aus einem Bild / Bilddaten, GNSS-Daten zur Geoposition und Daten zur IMU-Trägheit, deren Verarbeitung in einem Algorithmus zur Bestimmung eines Bildteilbereichs als "Bereich von Interesse", der als Eingabe Daten aus einem Bild / Bilddaten empfängt und den "Bereich von Interesse" im Bild ausgibt, und einem Bild-Georeferenzierungalgorithmus, der als Eingabe den "Bereich von Interesse" im Bild und die GNSS-Daten zur Geoposition und / oder Daten zur IMU-Trägheit oder eine Kombination davon empfängt und den georeferenzierten "Bereich von Interesse" ausgibt, und einem Aktuationsalgorithmus, der als Eingabe den georeferenzierten "Bereich von Interesse" empfängt und ein Aktuationssignal ausgibt, um die Aufgabe an der Nutzpflanze und / oder der Nicht-Nutzpflanze durchzuführen. Es werden u.U. nicht nur einzelne Kameraaufnahmen zur Bildanalyse ausgewertet, sondern auch die Historie der bereits ausgewerteten Informationen berücksichtigt. Zur Verwendung der historischen Informationen: Eine wesentliche Softwarekomponente ist die Nachbearbeitung bzw. Plausibilitätschecks der erkannten Nutzpflanzenpositionen.

Es ist zweckmäßig, wenn die computergestützte Veränderungseinheit vorhanden und vorbereitet ist, um eine Schnittstelle zu stellen, um auf Basis der verknüpften Daten zur Geoposition, IMU-Trägheit und dem "Bereich von Interesse" Informationen an eine Steuerungseinheit bereitzustellen, um die Position des maschinengestützten Systems zu verändern oder, um ein Anbauorgan zu bewegen.

Unter einem Anbauorgan wird verstanden, etwa ein Werkzeug zum Abschneiden, Entfernen, oder Beschädigen von Pflanzen oder ein Werkzeug zum Repositionieren des vorherigen Werkzeugs, oder ein Präzisionsbewässerungswerkzeug oder ein Düngewerkzeug oder ein Pflanzenbearbeitungswerkzeug, bspw. unter Einsatz von Pestiziden, und/oder Herbiziden. Dadurch, dass nun eine präzise Interaktion mit den Pflanzen möglich ist, benötigt man weniger Aufwand und insbesondere weniger Herbizide und Pestizide.

Der Aktuationsalgorithmus erzeugt hierbei in vorteilhafter Weise ein sog. Aktuationssignal. Dabei wird das Aktuationssignal durch eine vorgegebene Art und Weise der Verknüpfung der Informationen zu dem georeferenzierten und durch den Bild-Georeferenzierungsalgorithmus bereitgestellten "Bereich von Interesse" mit den Informationen zu dem IMU-Trägheitszustand. Das Aktuationssignal wird dabei vorteilhaft an eine Steuerungseinheit übermittelt und beinhaltet die notwendigen Informationen für einen Aktuator des maschinengestützten Systems, um eine Aufgabe an den Nutzpflanzen oder Nicht-Nutzpflanzen durchzuführen. Dieser Aufgabenaktuator des maschinengestützten Systems ist in vorteilhafter Weise in Form einer Vorrichtung des maschinengestützten Systems wie eines Schalters, Ventils oder Kolbens oder eines sonstigen Anbauorgans wie einer Vorrichtung oder eines Werkezeugs ausgeführt. Die Übermittlung des Aktuationssignals durch die Steuerungseinheit des maschinengestützten Systems an den Aufgabenaktuator erfolgt dabei in vorteilhafter Weise derArt, dass es mit größtmöglicher Präzision und Häufigkeit den "Bereich von Interesse", in Bezug auf die Position des Aufgabenaktuators, die Aufgaben und die Zeit, die dieser für die Ausführung der Aufgabe benötigt sowie die Richtung, die Geschwindigkeit und die Beschleunigung des maschinengestützten Systems oder eines anderweitigen Antriebssystems, an das das maschinengestützte System vorteilhaft montiert oder angeschlossen ist, bestimmt.

Die Erfindung wird auch realisiert, wenn ein Verfahren zur Änderung der Position einer Vorrichtung realisiert wird, wobei die Vorrichtung dazu bestimmt ist, eine Aufgabe an Nutzpflanzen und / oder Nicht-Nutzpflanzen durchzuführen, unter Verwendung von bildbasierten Daten, GNSS-Daten zur Geoposition und Daten zur IMU-Trägheit, deren Verarbeitung in einem Algorithmus zur Bestimmung eines Teilbildbereichs als "Bereich von Interesse", der als Eingabe Daten aus einem Bild / Bilddaten empfängt und den "Bereich von Interesse" im Bild ausgibt, und einem Bild-Georeferenzierungsalgorithmus, der als Eingabe den "Bereich von Interesse" im Bild und die GNSS-Daten zur Geoposition und / oder Daten zur IMU-Trägheit oder eine Kombination davon empfängt und den georeferenzierten "Bereich von Interesse" ausgibt, und einem Repositionierungsalgorithmus, der als Eingabe den georeferenzierten "Bereich von Interesse" empfängt und ein Repositionierungssignal ausgibt. Der Repositionierungsalgorithmus erfüllt demgegenüber die Funktion der Erzeugung eines Repositionierungssignals vorteilhaft, auf Basis einer vorgegebenen Verknüpfung der Informationen von dem Bild-Georeferenzierungsalgorithmus zu dem georeferenzierten "Bereich von Interesse" mit den IMU-Trägheitsinformationen. Die nachfolgende Übermittlung des Repositionierungssignals an einen Repositionierungsaktuator ist weiterhin vorteilhaft, um die Position des Aufgabenaktuators in Bezug auf den georeferenzierten "Bereich von Interesse" der Art zu ändern, dass der Aufgabenaktuator in der Lage ist, die dem Aufgabenaktuator zugedachte, erforderliche Aufgabe im ermittelten "Bereich von Interesse" an den Nutzpflanzen oder Nicht-Nutzpflanzen aus- / durchzuführen. Die Positionsänderung des Repositionierungsaktuators wird dabei in vorteilhafter Weise durch eine Steuerungseinheit realisiert. Die Steuerungseinheiten des Aktuationsaktuators und des Repositionierungsaktuators sind dabei in vorteilhafter Weise in der Steuerungseinheit des maschinengestützten Systems zusammengefasst oder als eine Einheit realisiert und Bestandteil der computergestützten Veränderungseinheit. Denkbar ist zudem die Realisierung der Steuerungseinheit als separate, über die computergestützte Veränderungseinheit hinausgehende Einheit.

Die Erfindung betrifft auch eine computergestützte Veränderungseinheit mit Befehlen zur Durchführung der vorgestellten Verfahren.

Die Erfindung wird nachfolgend mit Hilfe von Zeichnungen näher erläutert. Dabei sind verschiedene Ausführungsformen der Erfindung näher dargestellt. Es zeigen:
Fig. 1 eine Darstellung des Ablaufs der Bildaufnahme in Abhängigkeit von einer Bildfrequenz durch eine Bilderfassungsvorrichtung.
Fig. 2 eine Übersicht über die Verknüpfungen und des Informations- respektive Datenflusses zwischen den Einheiten des maschinengestützten Systems.

Die Figuren sind lediglich schematischer Natur und dienen nur dem Verständnis der Erfindung. Die gleichen Elemente sind mit denselben Bezugszeichen versehen.

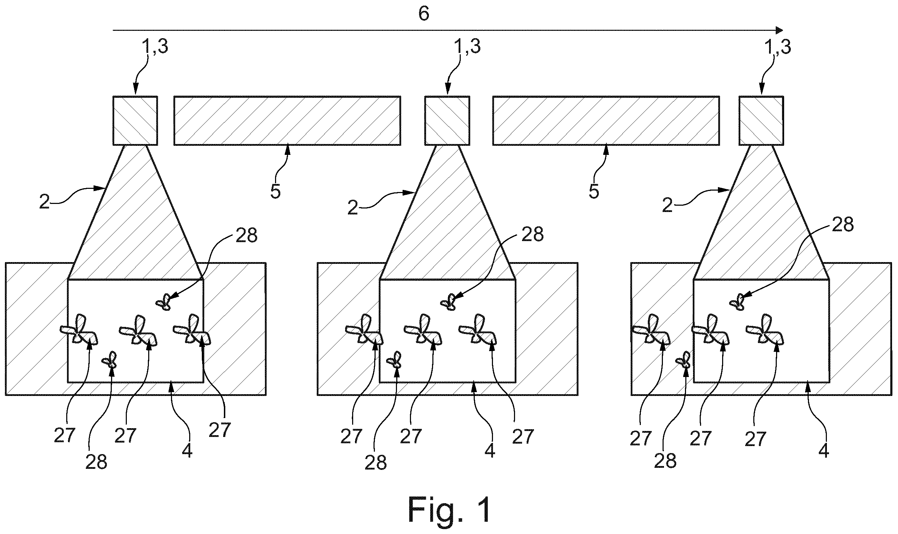

In der Fig. 1 ist der Ablauf der Bildaufnahme in Abhängigkeit von einer Bildfrequenz durch eine Bilderfassungsvorrichtung 1 dargestellt. Durch eine Bilderfassungsvorrichtung 1 in Ausgestaltung eines Kamerasystems erfolgt dem spezifischen Sichtfeld 2 entsprechend zu drei aufeinanderfolgenden und durch die gewählte Bildfrequenz definierten Zeitpunkten 3 eine Aufnahme eines Einzelbildes 4. Das aufgenommene Bild 4 ist durch das Sichtfeld 2 / den Bildbereich der Bilderfassungsvorrichtung 1 bestimmt und zeigt die Situation der Nutzpflanzen und Nicht-Nutzpflanzen zum Zeitpunkt der Einzelbildaufnahme 3 im Sichtfeld 2 der Bilderfassungsvorrichtung 1. Die Bildfrequenz bestimmt dabei nicht nur die Zeitpunkte der Bildaufnahme 3 und die pro Zeiteinheit aufgenommenen Bilder 4, sondern ebenfalls das Zeitintervall zwischen zwei Bildaufnahmen 5, für das keine Daten aus einem Bild 4 / Bilddaten vorliegen. Die zeitliche Abfolge der Einzelbildaufnahmen 6 ist verknüpft mit der Bewegung des maschinengestützten Systems in Abhängigkeit von der Zeit.

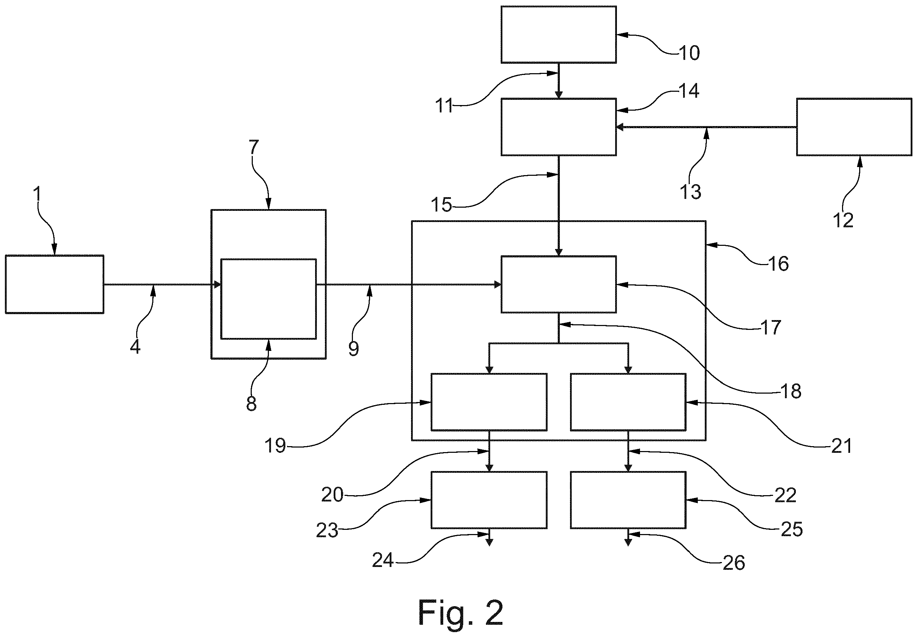

In der Fig. 2 ist eine Übersicht über die Verknüpfungen und des Informationsrespektive Datenflusses zwischen den Einheiten des maschinengestützten Systems gegeben. Durch die Bilderfassungsvorrichtung 1 erfolgt die Aufnahme von Einzelbildern 4, die als Eingangsdaten durch ein nachgeschaltetes computergestütztes Bildvereinbarungssystem 7 ein computerlesbares Medium 7 dienen. Durch das computergestützte Bildverarbeitungssystem / computerlesbare Medium 7 wird ein Algorithmus zur Bestimmung eines Bildteilbereichs 8, des "Bildbereichs von Interesse" 9 durchgeführt und im jeweiligen Einzelbild 4 angezeigt. Die bilddatenbasierten Informationen zu dem "Bereich von Interesse" 9 werden für eine computergestützte Veränderungseinheit 10 bereitgestellt. Simultan zu den Vorgängen der Aufnahme der Einzelbilder 4 und der Bestimmung des "Bereichs von Interesse" 9 erfolgt die Bestimmung der Position und des Zustands des maschinengestützten Systems. Für die Bestimmung der Position des maschinengestützten Systems ist eine Vorrichtung zur Georeferenzierung 11 beispielsweise in Ausgestaltungsform einer GNSS-Antenneneinheit vorgesehen, die Daten zu der Geoposition des maschinengestützten Systems erfasst. Für die Zustandserfassung des maschinengestützten Systems kann eine Einheit zur Erfassung von Daten zur IMU-Trägheit 14 beispielsweise in Ausgestaltung eines IMU-Sensors Einsatz finden und Daten zur IMU-Trägheit 14 im Sinne der beispielsweise Beschleunigung, Winkelgeschwindigkeit und Ausrichtung des maschinengestützten Systems an eine Verknüpfungseinheit im Sinne eines Navigationsverarbeitungssystems 15 weitergeben.

Das Navigationsverarbeitungssystem 15 verknüpft die Daten in der Folge mit den durch die Vorrichtung zur Georeferenzierung 11 bereitgestellten Daten zur Geoposition 12 des maschinengestützten Systems. Die auf diese Weise verknüpften Informationen zu Geodaten und IMU-Trägheit 16 werden durch die computergestützte Veränderungseinheit 10 zusammen mit den Daten zu dem "Bereich von Interesse" 9 verarbeitet. Dies impliziert, dass aus den verknüpften Informationen 16 über einen Bild-Georeferenzierungsalgorithmus 17 ein georeferenzierter "Bereich von Interesse" 17 identifiziert wird, der einen späteren Eingriffsbereich der Nutzpflanzen / Nicht-Nutzpflanzen darstellt.

Dieser georeferenzierte "Bereich von Interesse" 17 dient als Eingangsinformation für einen Aktuationsalgorithmus 19 und einen Repositionsalgorithmus 20. Die Algorithmen liefern nach computergestützter Verarbeitung ein Aktuationssignal 21 respektive ein Repositionierungssignal 22 als Ausgangsinformationen, die an einen Aufgabenaktuator 23 für die Durchführung einer Aufgabe 24 respektive an einen Repositionierungsaktuator 25 zur Durchführung einer Positionsänderung 26 als beispielsweise Steuerinformation weitergegeben werden.

### Bezugszeichenliste

- 1: Bilderfassungsvorrichtung / Kamerasystem
- 2: Sichtfeld / Bildbereich der Bilderfassungsvorrichtung / Kamerasystem
- 3: Zeitpunkt der Einzelbildaufnahme
- 4: Einzelbild / Bild
- 5: Zeitintervall ohne Bildinformationen / Zeitintervall zwischen zwei Einzelbildaufnahmen in Abhängigkeit von der Bildfrequenz
- 6: Bildabfolgerichtung in Abhängigkeit von der Aufnahmezeit
- 7: Computergestütztes Bildverarbeitungssystem / Computerlesbares Medium
- 8: Algorithmus zur Bestimmung eines Bildteilbereichs
- 9: "Bereich von Interesse"
- 10: Computergestütze Veränderungseinheit
- 11: Vorrichtung für die Georeferenzierung
- 12: Daten zur Geoposition
- 13: Einheit zur Erfassung von Daten zur IMU-Trägheit
- 14: Daten zur IMU-Trägheit
- 15: Verknüpfungseinheit / Navigationsverarbeitungssystem
- 16: Verknüpfte Informationen zu Geodaten und IMU-Trägheit
- 17: Bild-Georeferenzierungsalgorithmus
- 18: Georeferenzierter "Bereich von Interesse"
- 19: Aktuationsalgorithmus
- 20: Respositionierungsalgorithmus
- 21: Aktuationssignal
- 22: Repositionierungssignal
- 23: Aufgabenaktuator
- 24: Aufgabe
- 25: Repositionierungsaktuator
- 26: Änderung einer Position / Positionsänderung
- 27: Nutzpflanze
- 28: Nicht-Nutzpflanze / Unkraut

## Patentansprüche

1. Maschinengestütztes System für eine landwirtschaftliche Nutzung, **dadurch gekennzeichnet, dass** das System eingerichtet und vorbereitet ist, um eine Aufgabe (24) wie eine Unterscheidung zwischen Nutzpflanzen (27) und Nicht-Nutzpflanzen (28) und/oder eine Positionsänderung (26) einer Vorrichtung durchzuführen, die dazu bestimmt ist, eine Aufgabe (24) an Nutzpflanzen (27) und/oder Nicht-Nutzpflanzen (28) durchzuführen.

2. Maschinengestütztes System nach Anspruch 1, **dadurch gekennzeichnet, dass** mindestens eine maschinensystemseitige oder externe computergestützte Bilderfassungsvorrichtung (1) vorhanden ist, die ausgelegt ist, mit einem vorzugsweise vordefinierten Sichtfeld (2) und mit einer vorzugsweise vordefinierten Bildfrequenz (3) eine Vielzahl von Einzelbildern (4) aufzunehmen.

3. Maschinengestütztes System nach Anspruch 1 und 2, **dadurch gekennzeichnet, dass** ein computerlesbares Medium (7) vorhanden ist, das konfiguriert ist, um einen Algorithmus zur Bestimmung eines Bildteilbereichs (8) als "Bereich von Interesse" (9) auszuführen.

4. Maschinengestütztes System nach Anspruch 1 und 3, **dadurch gekennzeichnet, dass** eine maschinensystemseitige Vorrichtung für eine Georeferenzierung (11) des Systems vorhanden ist.

5. Maschinengestütztes System nach Anspruch 1 bis 4, **dadurch gekennzeichnet, dass** eine maschinensystemseitige Einheit zur Erfassung der IMU-Trägheit (13) vorhanden ist.

6. Maschinengestütztes System nach Anspruch 4 oder 5, **dadurch gekennzeichnet, dass** eine Verknüpfungseinheit (10) vorhanden und vorbereitet ist, die die eingehenden Daten zur Geoposition (12) und IMU-Trägheit (13) zu verknüpfen.

7. Maschinengestütztes System nach Anspruch 1 bis 6, **dadurch gekennzeichnet, dass** die computergestützte Veränderungseinheit (10) vorhanden und vorbereitet ist, um eine Schnittstelle zu stellen, um auf Basis der verknüpften Daten zur Geoposition (12), IMU-Trägheit (13) und dem "Bereich von Interesse" (9) Informationen an eine Steuerungseinheit bereitzustellen, um die Position des maschinengestützten Systems zu verändern oder, um ein Anbauorgan zu bewegen.

8. Verfahren zur Durchführung einer Aufgabe (24) an Nutzpflanzen (27) und/oder Nicht-Nutzpflanzen (28) unter Verwendung von Daten aus einem Bild (4) / Bilddaten, GNSS-Daten zur Geoposition (11) und Daten zur IMU-Trägheit (12), deren Verarbeitung in einem Algorithmus zur Bestimmung eines Bildteilbereichs (8) als "Bereich von Interesse" (9), der als Eingabe Daten aus einem Bild (4) / Bilddaten empfängt und den "Bereich von Interesse" (9) im Bild (4) ausgibt, und einem Bild-Georeferenzierungalgorithmus (17), der als Eingabe den "Bereich von Interesse" (9) im Bild (4) und die GNSS-Daten zur Geoposition (11) und / oder Daten zur IMU-Trägheit (13) oder eine Kombination davon empfängt und den georeferenzierten "Bereich von Interesse" (18) ausgibt, und einem Aktuationsalgorithmus (19), der als Eingabe den georeferenzierten "Bereich von Interesse" (18) empfängt und ein Aktuationssignal (21) ausgibt, um die Aufgabe (24) an der Nutzpflanze (27) und / oder der Nicht-Nutzpflanze (28) durchzuführen.

9. Verfahren zur Änderung der Position (26) einer Vorrichtung, die dazu bestimmt ist, eine Aufgabe (24) an Nutzpflanzen (27) und / oder Nicht-Nutzpflanzen (28) durchzuführen, unter Verwendung von bildbasierten Daten (4), GNSS-Daten zur Geoposition (11) und Daten zur IMU-Trägheit (13), deren Verarbeitung in einem Algorithmus zur Bestimmung eines Teilbildbereichs (8) als "Bereich von Interesse" (9), der als Eingabe Daten aus einem Bild (4) / Bilddaten empfängt und den "Bereich von Interesse" (9) im Bild (4) ausgibt, und einem Bild-Georeferenzierungsalgorithmus (17), der als Eingabe den "Bereich von Interesse" (9) im Bild (4) und die GNSS-Daten zur Geoposition (11) und / oder Daten zur IMU-Trägheit (13) oder eine Kombination davon empfängt und den georeferenzierten "Bereich von Interesse" (18) ausgibt, und einem Repositionierungsalgorithmus (20), der als Eingabe den georeferenzierten "Bereich von Interesse" (18) empfängt und ein Repositionierungssignal (22) ausgibt.

10. Computergestützte Veränderungseinheit (10) mit Befehlen zur Durchführung des Verfahrens nach Anspruch 8 und / oder 9.
